# EUROPEAN PATENT SPECIFICATION

(11) **EP 3 970 561 B1**
(45) Date of publication and mention of the grant of the patent: **18.01.2023**
(21) Application number: 20000338.2
(22) Date of filing: 22.09.2020
(51) Int. Cl.: A47B 47/00, F16B 12/40

(54) **FIXING SYSTEM OF OBLONG ELEMENTS WITH JOINT ELEMENT AND STRUCTURE PROVIDED WITH FIXING SYSTEM FOR PIECES OF FURNITURE, PIECES OF FURNITURE OR ACCESSORIES FOR PIECES OF FURNITURE**
BEFESTIGUNGSSYSTEM AUS LÄNGLICHEN ELEMENTEN MIT VERBINDUNGSELEMENT UND STRUKTUR MIT BEFESTIGUNGSSYSTEM FÜR MÖBEL, MÖBEL ODER MÖBELZUBEHÖRTEILE
SYSTÈME DE FIXATION D'ÉLÉMENTS OBLONGS AVEC ÉLÉMENT DE JOINT ET STRUCTURE DOTÉE D'UN SYSTÈME DE FIXATION POUR ÉLÉMENTS DE MOBILIER, ÉLÉMENTS DE MOBILIER OU D'ACCESSOIRES POUR DES ÉLÉMENTS DE MOBILIER

(43) Date of publication of application: 23.03.2022
(73) Proprietor: Eureka S.r.l., 31040 Gorgo al Monticano (TV) (IT)
(72) Inventor: Covre, Giuseppe, 31040 Gorgo Al Monticano (TV) (IT)
(74) Representative: D'Agostini, Giovanni

(56) References cited:
- DE-A1- 2 332 017
- FR-A1- 2 028 278
- JP-U- S57 160 410

## Description

### Technical field

The present invention relates to a fixing system of oblong elements with joint element for pieces of furniture, a structure provided with fixing system for pieces of furniture, pieces of furniture or accessories for pieces of furniture comprising such joining system or structure according to the characteristics of the pre-characterizing portion of the appended claims.

### Prior art

In the field of production of structures for pieces of furniture, fixing systems are known, for example, in which aluminium pipes with square section are reciprocally right-angle joined by means of a metallic joint to which the aluminium pipes are fixed by means of screws. The metallic joint has a complex shape with an essentially cubic solid body which constitutes a visible angle of the structure. On two sides of the angular solid body there are couples of projecting protrusions which are inserted within the aluminium pipes with square section, so as to constitute reinforcing elements of the structure and on one of the protrusions a threaded seat is obtained for the fixing by means of a screw of an aluminium pipe provided with corresponding through-hole for the passage of the screw. On a third side of the angular solid body there is a protrusion with triangular shape in section, provided with threaded seats as well along two sides of the triangular shape, for the fixing by means of a screw of an aluminium pipe. The triangular shape in section is made for the purpose of allowing the rotation of the metallic joint in order to make it suitable for both the execution of an angle of the structure placed in the lower part with an aluminium pipe which develops vertically upward, and the execution of an angle of the structure placed in the higher part with an aluminium pipe which develops vertically downward, wherein the aluminium pipe has the fixing holes for the screws placed on a same side so that they remain internal to the volume of the structure to hide the screws in the normal condition of use of the structure. In this way with a single element it is possible to make all the eight corners of a quadrangular structure for pieces of furniture.

The application JP S50 139101 describes an assembly system for a frame in which the stanchions are provided with carvings for insertion of joint elements in the form of bent small plates provided with threaded holes for the reciprocal fixing by means of screws for reciprocal fixing between the small plate and the crosspiece. The stability of the structure is given not only by the screws but also by the tolerance of the carvings with respect to the width of the small plate which is inserted therein and there are no support surfaces on the small plate which may allow to obtain a backing with corresponding surfaces of the stanchion or the crosspiece.

The application JP S48 103329 describes an assembly system for a frame in which the stanchions are provided with carvings for insertion of joint elements in the form of bent small plates provided with slots with central hole for insertion of revolving pallets which are blocked for rotation and interference for reciprocal fixing between the small plate and the crosspiece. The stability of the structure is given not only by the pallets but also by the tolerance of the carvings with respect to the width of the small plate which is inserted therein and there are no support surfaces on the small plate which may allow to obtain a backing with corresponding surfaces of the stanchion or the crosspiece.

The application DE 19 07 706 describes an assembly system for a frame in which the stanchions are provided with carvings for insertion of joint elements in the form of a combination of two shaped and bent plates provided with holes for insertion of reciprocal fixing screws between one of the small plates and the crosspiece. The stability of the structure is given not only by the screws but also by the tolerance of the carvings with respect to the width of the small plate which is inserted therein and there are no support surfaces on the small plate which may allow to obtain a backing with corresponding surfaces of the stanchion. There are backing surfaces on the small plates relative to the reciprocal coupling function between the small plate and the crosspiece.

The application GB 1 068 138 describes an assembly system for a frame in which the stanchions are provided with carvings for insertion of joint elements in the form of a bent small plate provided with holes for insertion of reciprocal fixing screws between the small plate and the crosspiece. The stability of the structure is given not only by the screws but also by the tolerance of the carvings with respect to the width of the small plate which is inserted therein and there are no support surfaces on the small plate which may allow to obtain a backing with corresponding surfaces of the stanchion. There are support surfaces inside the section of the crosspiece, on which the small plates enter into contact without locking for interference and without the presence of backing surfaces, the function of the support surfaces being to constitute a coupling interface for the insertion of through screws which reciprocally fix crosspiece and small plate.

The application DE2332017A1 also discloses an assembly system for a frame known in the art.

### Problems of the prior art

The prior art system shown, though being adaptable and simple to use, has a lot of disadvantages.

First of all, the metallic joint is constructively complex because it is made by means of a metal press process producing a complex shape comprising an essentially cubic solid body and a closed triangular section portion which protrudes with respect to the body also with the couples of projecting protrusions.

The complex construction of the metallic joint has negative consequences also from the point of view of the costs of the final finished product and the incidence is considerable of the cost of the joint with respect to the components, also comprising the profiles and the screws.

Furthermore, the metallic joint constitutes a structural element which remains visible in the finished assembled product and, consequently, it is also necessary to execute superficial finishing to make the surface smooth, and also varnishing operations in the same colour as the one of the sections, further increasing the costs.

### Aim of the invention

The aim of the present invention is to supply a fixing system of oblong elements with joint element and structure provided with fixing system for pieces of furniture which is constructively simpler and more economic.

### Concept of the invention

The aim is achieved with the characteristics of the main claim. The sub-claims represent advantageous solutions.

### Advantageous effects of the invention

The solution according to the present invention, through the considerable creative contribution the effect of which constitutes an immediate and not negligible technical progress, has various advantages.

With respect to prior art solutions, the inventive solution allows the production of joint elements which are constructively simpler with a considerable reduction in production costs, so much that the joint element of the inventive system can also have a cost as low as about 15% of the cost of the metallic joint used in the prior art systems. This also results in a lower total cost of the structure provided with the fixing system and the overall cost of the structure can also be as low as 50%.

Furthermore, the inventive solution also allows to use joint elements without surface finishing or varnishing with the additional advantage that possible scratches which may be made whilst assembling the structure would be then hidden, the joint element being completely hidden within the structure itself.

Furthermore, the inventive solution allows to obtain a more solid structure and, with equal size of the structure and of load, the inventive structure has a double flexion resistance with respect to the known prior art solutions.

### Description of the drawings

An embodiment solution is hereinafter described with reference to the enclosed drawings to be considered as a non-limitative example of the present invention in which:
Fig. 1 is a perspective view of an oblong element of the inventive fixing system and of the inventive structure.
Fig. 2 represents a plan view of the oblong element of Fig. 1.
Fig. 3 represents a sectional view of the oblong element according to the section line indicated with A-A in Fig. 2.
Fig. 4 represents a view of the oblong element of Fig. 2 according to the point of view indicated with B in Fig. 2.
Fig. 5 represents a perspective view of one possible embodiment of the joint element of the inventive fixing system and of the inventive structure.
Fig. 6 represents a perspective view of the joint element of Fig. 5 according to a different point of view.
Fig. 7 represents a plan view of the joint element of Fig. 5.
Fig. 8 represents a perspective view of an additional embodiment of the joint element of the inventive fixing system and of the inventive structure.
Fig. 9 represents a perspective view of an additional embodiment of the joint element of the inventive fixing system and of the inventive structure.
Fig. 10 represents a perspective view showing the coupling made by means of the inventive fixing system and of the execution of the inventive structure by means of the joint element of Fig. 5
Fig. 11 represents a perspective view showing the coupling made by means of the inventive fixing system and of the execution of the inventive structure by means of the joint element of Fig. 5 in correspondence with a second end of the oblong element.
Fig. 12 represents a perspective view showing the coupling made by means of the inventive fixing system and of the execution of the inventive structure by means of the joint element of Fig. 5 in correspondence with a first end of the oblong element.
Fig. 13 represents a perspective view showing the coupling made by means of the inventive fixing system and of the execution of the inventive structure by means of the joint element of Fig. 9.
Fig. 14 represents a perspective view showing the coupling made by means of the inventive fixing system and of the execution of the inventive structure by means of the joint element of Fig. 9.
Fig. 15 represents a perspective view showing the coupling made by means of the inventive fixing system and of the execution of the inventive structure by means of the joint element of Fig. 9.
Fig. 16, Fig. 17, Fig. 18, Fig. 19 show an assembly sequence of the components of the inventive fixing system for the execution of the inventive structure.
Fig. 20 represents a perspective view of an additional embodiment of the joint element of the inventive fixing system and of the inventive structure.
Fig. 21 represents a perspective view of an additional embodiment of the joint element of the inventive fixing system and of the inventive structure.
Fig. 22 represents a perspective view of an additional embodiment of the joint element of the inventive fixing system and of the inventive structure.
Fig. 23 represents a perspective view of an additional embodiment of the joint element of the inventive fixing system and of the inventive structure.
Fig. 24 schematically represents a piece of furniture incorporating the structure provided with the inventive fixing system.
Fig. 25 schematically represents a wing for piece of furniture incorporating the structure provided with the inventive fixing system.
Fig. 26 schematically represents a piece of furniture in the form of wall-mounted unit incorporating the structure provided with the inventive fixing system.

### Description of the invention

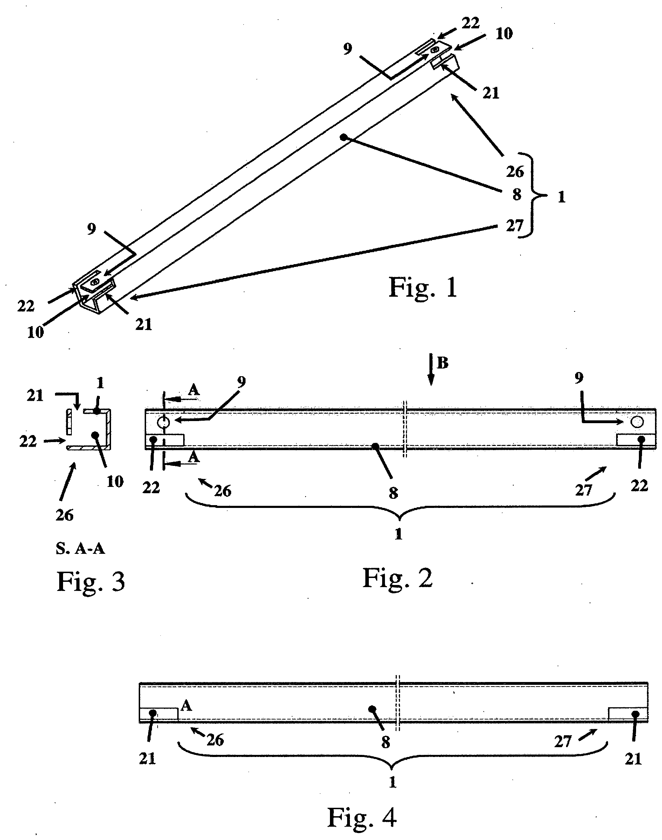

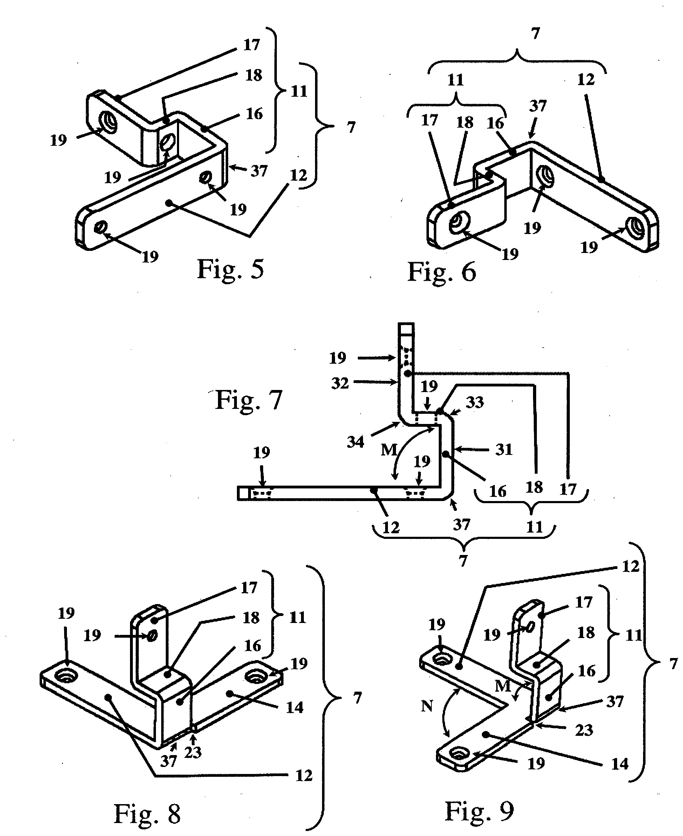

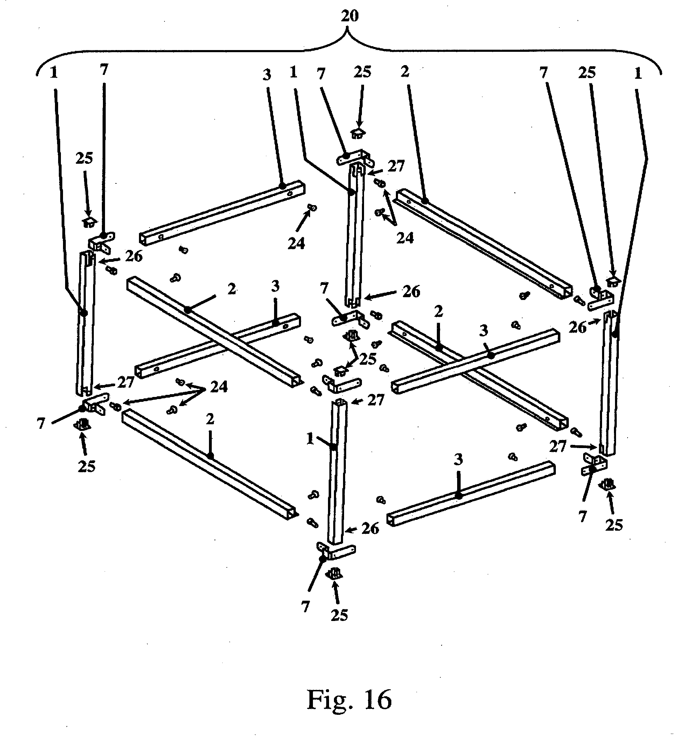

The present invention relates to a fixing system of (Fig. 1, Fig. 2, Fig. 3, Fig. 4) oblong elements (1, 2, 3, 4, 5, 6) by means of (Fig. 5, Fig. 6, Fig. 7, Fig. 8, Fig. 9, Fig. 20, Fig. 21, Fig. 22, Fig. 23) a joint element (7, 7', 7") for the execution (Fig. 16, Fig. 17, Fig. 18, Fig. 19) of a structure (20) for pieces of furniture. In particular, the fixing system provides a combination of characteristics of reciprocal coupling between at least one first oblong element (1) and one joint element (7, 7', 7") with execution of a base coupling between two elements on which additional oblong elements (2, 3, 4, 5, 6) can be fixed up to the obtention of a structure (20) for pieces of furniture.

At least the first oblong element (1) includes, at least in correspondence with an end (26, 27) of the elongated shape, at least one couple of seats (21, 22) having a long and narrow groove shape in which a first seat (21) is obtained on a first side of the first oblong element (1) and a second seat (21) is obtained on a second side of the first oblong element (1), in which the second side is preferably a side adjacent to the first side with respect to a polygonal configuration in section of the first oblong element (1). For example, the first oblong element (1) can have a quadrangular or square shape in section in such a way that the first seat (21) is obtained on a first side and the second seat (21) is obtained on a second side in which first and second side are adjacent sides placed at 90 degrees. It will be evident that solutions with different shapes in section can be also provided, such for example hexagonal, in which case the seats (21, 22) can be obtained on non-adjacent sides, so as to make in any case a 90-degree coupling with a second oblong element. The expression "long and narrow" referred to the groove means a groove shape in which a first side of the groove has dimension in length greater or much greater than the dimension in length of the second side of the groove. The seats (21, 22) are open in correspondence with the end (26, 27) of the elongated shape on which they are obtained in order to allow an insertion within each seat of one arm (11, 12, 13, 14) of the joint element (7, 7', 7").

The joint element (7, 7', 7") includes (Fig. 5, Fig. 6, Fig. 7, Fig. 8, Fig. 9, Fig. 20, Fig. 21, Fig. 22, Fig. 23) at least one couple of arms (11, 12, 13, 14) consisting of a first arm (11) and a second arm (12), which are placed according to a first angle (M) of reciprocal inclination in which the joint element (7, 7', 7") is suitable for performing a joint between at least two of the oblong elements (1, 2, 3, 4, 5, 6), that is at least between a first oblong element (1) and a second oblong element (2). Preferably, the joint element (7, 7', 7") is suitable for performing a joint between at least three of the oblong elements (1, 2, 3, 4, 5, 6), that is at least between a first oblong element (1) and a second oblong element (2) and a third oblong element (3) constituting an angular shape which corresponds to an edge of the structure (20). Each arm (11, 12, 13, 14) has a flat shape in section and at least one first arm (11) has a shape comprising a bending (33) and a counter-bending (34) defining portions of the first arm (11) including a first portion (16) and a second portion (17) reciprocally parallel and connected and spaced by a third portion (18) present between the bending (33) and the counter-bending (34).

Advantageously, this configuration of the joint element (7, 7', 7"), in which each arm (11, 12, 13, 14) has a flat shape in section and at least one first arm (11) has a shape comprising a bending (33) and a counter-bending (34), allows to obtain the joint element (7, 7', 7") by means of a simple operation of die cutting without the help of working centres, making its manufacturing particularly economical with respect to the complex shape of the metallic joint of prior art. In this way the joint element (7, 7', 7") is obtained from a flat small plate by means of simple shearing and bending.

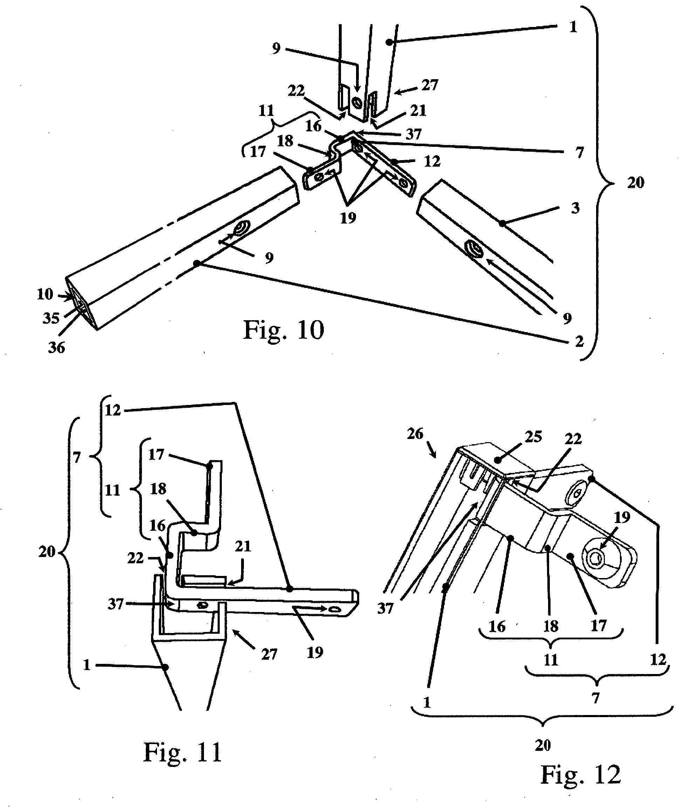

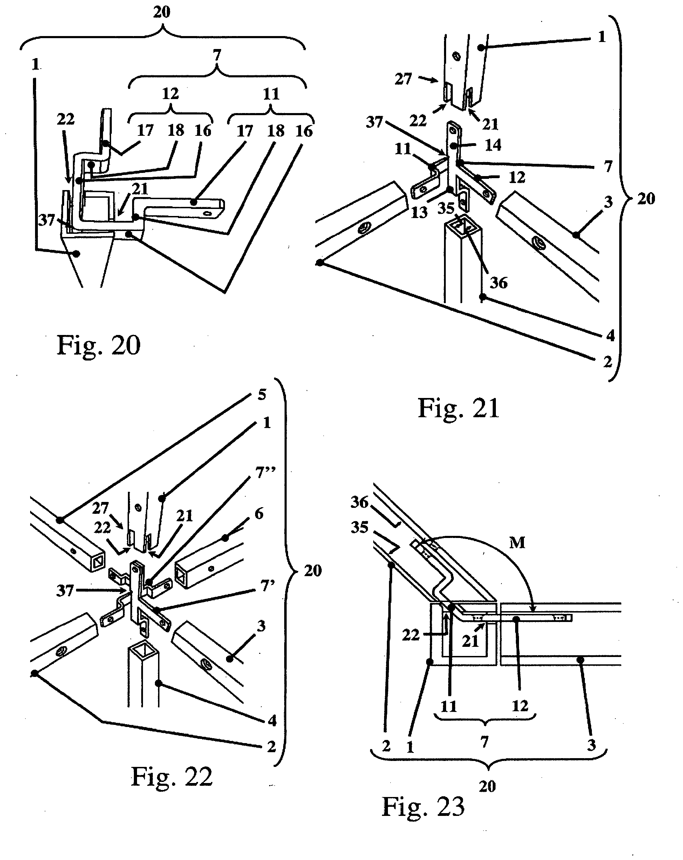

The first portion (16) of the first arm (11) is provided with a first external surface (31) and the second portion (17) of the first arm (11) is provided with a second external surface (32) which are reciprocally spaced at a distance corresponding to the distance between a couple of internal walls of an internal hollow (10) of one of the oblong elements such as for example the second oblong element (2) of which (Fig. 10, Fig. 21):
- a first wall (35) suitable for being in support condition against the first surface (31) of the first portion (16);
- a second wall (36) suitable for being in support condition against the second surface (32) of the second portion (17);
when the first arm (11) is in insertion condition within the internal hollow (10) of the second oblong element (2).

In this way, the couple of external surfaces (31, 32) of the first arm (11), when the first arm (11) is in insertion condition within the internal hollow (10) of the corresponding oblong element, such as for example of the second oblong element (2), form opposed support surfaces which contribute to two functions:
- a first function is structural because the opposed support surfaces stiffen the structure (20) in correspondence with the edges, consequently the inventive solution allows to obtain a more solid structure with a double flexion resistance with respect to the known prior art solutions;
- a second function is helpful to the assembly because the opposed support surfaces contribute to the driven insertion of the first arm (11) within the internal hollow (10) of the corresponding oblong element, such as for example of the second oblong element (2), during the assembly of the structure (20).

With particular reference to the fixing system, therefore, it provides a reciprocal coupling between at least the first oblong element (1) and the joint element (7, 7', 7") with execution of a base coupling between two elements on which additional oblong elements (2, 3, 4, 5, 6) can be fixed, such as for example a third oblong element (3) up to the obtention of a structure (20) for pieces of furniture.

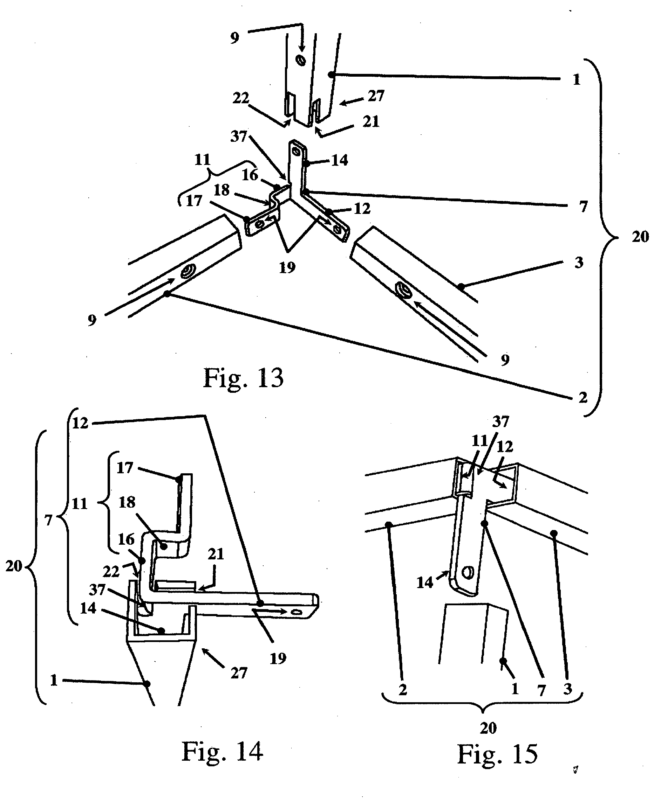

In particular, the base coupling between the first oblong element (1) and the joint element (7, 7', 7") occurs (Fig. 11, Fig. 14, Fig. 16, Fig. 17, Fig. 18, Fig. 19, Fig. 20, Fig. 23) by means of an insertion of a part of the joint element (7, 7', 7") within an internal volume defined by a hollow (10) of the first oblong element (1) using the seats (21, 22) in such a way that at least two arms (11, 12) of the joint element (7, 7', 7") protrude externally to the internal volume of the first oblong element (1) through the first seat (21) obtained on the first side and through the second seat (21) obtained on the second side of the first oblong element (1), in such a way that the vertex of the first angle (M) is inside the hollow (10) of the first oblong element (1). The joint element (7, 7', 7") is fixed to the first oblong element (1) by means of a screw (24) which crosses a first through-hole (9) obtained on the first oblong element (1) to be screwed on a corresponding second threaded hole (19) obtained on the joint element (7, 7', 7").

The joint element (7, 7', 7") is provided with additional second threaded holes (19) in correspondence with each of the arms (11, 12, 13, 14) for fixing by means of additional screws (24) of the additional oblong elements (2, 3, 4, 5, 6). For example, in the case of joint element (7, 7', 7") provided (Fig. 10) with first arm (11) and second arm (12), second threaded holes (19) will be respectively present of which the second holes (19) present on the first arm (11) are suitable for the fixing by means of screws (24) of the second oblong element (2) while the second holes (19) present on the second arm (12) are suitable for the fixing by means of screws (24) of the third oblong element (3).

In one embodiment (Fig. 8, Fig. 9, Fig. 13, Fig. 14, Fig. 15, Fig. 21, Fig. 22) it is provided that the joint element (7, 7', 7") is equipped with an auxiliary arm (14) which is inserted within the hollow (10) of the first oblong element to increase the stiffness and overall stability of the structure (20). In such a case (Fig. 8, Fig. 9) the execution of two types of joint element (7, 7', 7") is provided, in which the auxiliary arm (14) is placed respectively on the right or on the left with respect to the position of first arm (11) and second arm (13) in order to be able to execute couplings in correspondence with different corners of a quadrangular structure.

In one embodiment (Fig. 21, Fig. 22) it is provided that the joint element (7, 7', 7") is equipped with a third arm (13) which is suitable for the fixing of a fourth oblong element (4), this solution being useful for example to connect between each other the components of two quadrangular shapes of the structure (20) for the purpose of increasing the overall stoutness of a large structure with reciprocally adjacent quadrangular portions.

In one embodiment (Fig. 22) it is provided that in one single first oblong element (1) two joint elements (7', 7") may be coupled of which:
- a first joint element (7') suitable for performing the joint with a second oblong element (2) and a third oblong element (3) and a fourth oblong element (4);
- a second joint element (7") suitable for performing the joint with a fifth oblong element (5) and a sixth oblong element (6);
such a configuration executing a central joining between six different oblong elements. In such a case the first oblong element (1) will be provided with two of said couples of seats (21, 22), of which a first couple suitable for the insertion of the first joint element (7') and a second couple suitable for the insertion of the second joint element (7").

Though in the shown embodiments (Fig. 5, Fig. 8, Fig. 9) the arms (11, 12, 14) are placed according to a configuration in which the first angle (M) is of 90 degrees, solutions can be provided (Fig. 23) in which the first angle (M) is greater than 90 degrees or less than 90 degrees. Likewise, in the case of joint element (7, 7', 7") provided with auxiliary arm (14), it can be provided (Fig. 9) that it is placed according to an inclination corresponding to a second angle (N) which can be equal to 90 degrees, greater than 90 degrees or less than 90 degrees.

Preferably, the joint element (7, 7', 7") is provided with a step (23) which allows to obtain a recessed insertion position of the joint element (7, 7', 7") within the hollow (10) of the first oblong element (1). In this way, the joint element (7, 7', 7") can be advantageously hidden by means of application of a cover (25) which is fixed in an embedded way within the remaining space of the hollow (10) of the first oblong element, in such a way that the cover (25) is placed in flush condition with the other oblong elements of the structure. Thanks to this solution the joint element (7, 7', 7") is completely hidden from view and, advantageously, it does not need surface finishing or varnishing, further reducing its cost.

For the execution of a structure (20) having a closed shape it is provided that the first oblong element (1) is equipped with the couple of seats (21, 22) both in correspondence with the first end (26) and in correspondence with a second end (27) opposite to the first end (26) with respect to the elongated shape of the first oblong element (1). In this way, to each end of the first oblong element (1) a corresponding joint element (7, 7', 7") can be inserted to execute the coupling with additional oblong elements (2, 3, 4, 5, 6) on each one of the ends (26, 27) of the same first oblong element (1).

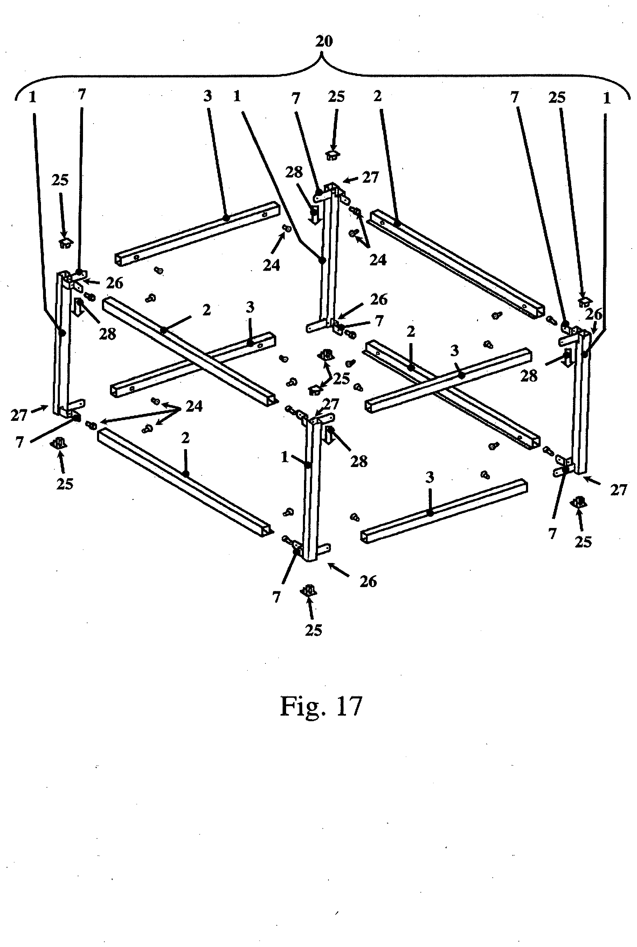

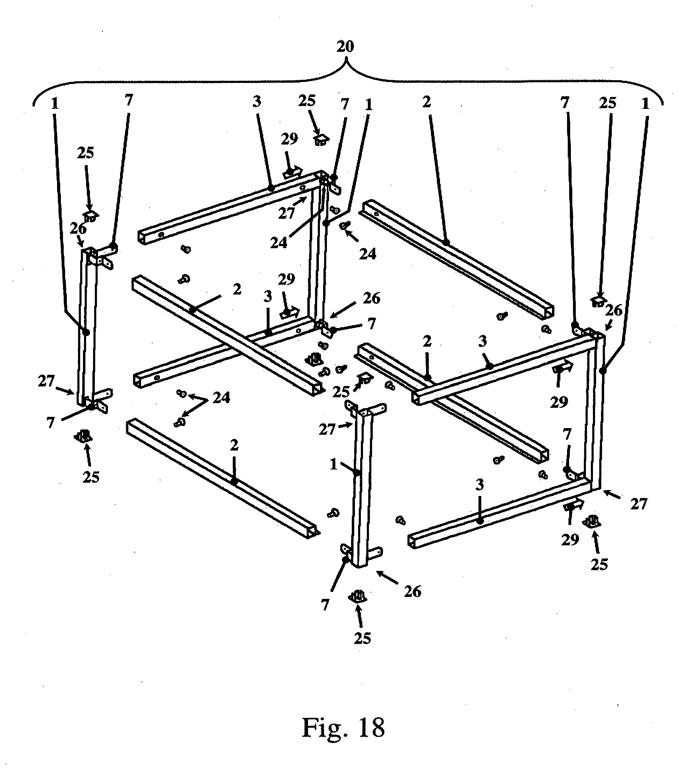

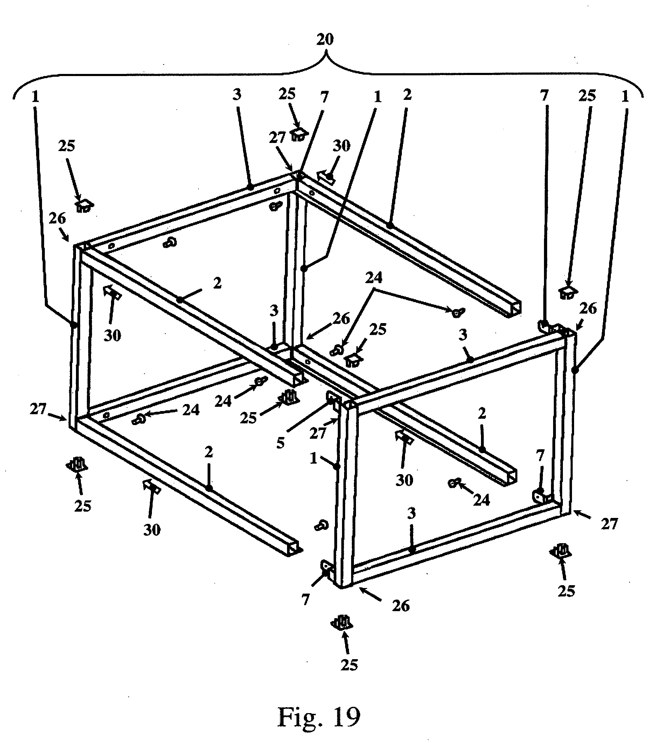

For example, (Fig. 16, Fig. 17, Fig. 18, Fig. 19) for the execution of a structure (20) having a closed quadrangular shape four first oblong elements (1) can be provided placed on opposite corners of the quadrangular structure (20) in which each one of the four first oblong elements (1) is provided with the couple of seats (21, 22) both in correspondence with the first end (26) and in correspondence with the second end (27). Through the insertion of eight joint elements (7, 7', 7"), one for each end (26, 27) of each one of the four first oblong elements (1), according to (Fig. 17) a corresponding direction of insertion of the joint element (28), a configuration is obtained in which each end (26, 27) of each one of the four first oblong elements (1) is ready for coupling with an end of second oblong elements (2) and third oblong elements (3). For example, a second oblong element (2) can be inserted, according to (Fig. 19) a corresponding direction of insertion of the second oblong element (30), on the arm of a joint element (7, 7', 7") at one side and on the arm of another joint element (7, 7', 7") at the opposite side, thus executing a longitudinal connection between two first oblong elements (1). For example, a third oblong element (3) can be inserted, according to (Fig. 18) a corresponding direction of insertion of the third oblong element (29), on the arm of a joint element (7, 7', 7") at one side and on the arm of another joint element (7, 7', 7") at the opposite side, thus executing a transverse connection between two first oblong elements (1). By means of progressive application of the screws (24) the joint elements (7, 7', 7") are fixed to the first oblong elements (1) and by means of progressive application of the screws (24) the second oblong elements (2) and the third oblong elements (3) are fixed to the joint elements (7, 7', 7") executing the coupling with the corresponding first oblong elements (1). The application of the covers (25) in correspondence with the vertices of the structure (20) completely hides the presence of the joint elements (7, 7', 7") thus creating a structure which is visually completely indistinguishable from an analogous structure made with metallic joint systems of prior art, but with overall costs which may be on the order of half the cost of an analogous structure of prior art.

In the case of joint element (7, 7', 7") made with two arms (Fig. 5, Fig. 6, Fig. 7), as well as in the case of joint element (7, 7', 7") made with three arms (Fig. 8, Fig. 9), as well as in the case of joint element (7, 7', 7") made with four arms (Fig. 21), it constitutes a joining square obtained from stamped plate, which undergoes at least one sharp turn bending to obtain the described shapes and this square is "drowned" inside the first oblong element (1) on which the seats (21, 22) are obtained shaped like slit allowing the exit of the arms of the square and inside the additional oblong elements (2, 3, 4, 5, 6) which cover such arms exiting from the first oblong element (1).

In conclusion the present invention relates to a fixing system of a series of oblong elements (1, 2, 3, 4, 5, 6) for a structure (20) for pieces of furniture, the fixing system comprising at least one joint element (7, 7', 7") which constitutes a coupling interface between at least two of the oblong elements (1, 2, 3, 4, 5, 6) in such a way that the reciprocal coupling of the series of oblong elements (1, 2, 3, 4, 5, 6) by means of a series of joint elements (7, 7', 7") and fixing means (24) is suitable for the assembly of the structure (20). The joint element (7, 7', 7") includes at least two arms (11, 12) of which a first arm (1) and a second arm (2) reciprocally connected in correspondence with a connection zone (37), in which first arm (1) and second arm (2) are reciprocally inclined according to a first angle (M), the oblong elements (1, 2, 3, 4, 5, 6) being provided with a body (8) with elongated shape. The fixing system includes:
- a hollow (10) obtained in the body (8) in correspondence at least with a first end (26) of a first oblong element (1) of the series of oblong elements (1, 2, 3, 4, 5, 6);
- a first seat (21) and a second seat (22) of insertion obtained in correspondence with the first end (26) of the first oblong element (1) in such a way that each one of first seat (21) and second seat (22) puts in communication the inside the hollow (10) with the outside of the hollow (10).

The first seat (21) and the second seat (22) of insertion are reciprocally placed spaced along the perimeter of the hollow according to a reciprocal positioning corresponding to the inclination according to the first angle (M) in such a way that the joint element (7, 7', 7") is insertable within the hollow according to a configuration in which the connection zone (37) between the arms (1, 2) is housed within the hollow (10), the first arm (11) protrudes externally with respect to the hollow (10) through the first seat (21) constituting a first support element for a second oblong element (2), the second arm (12) protrudes externally with respect to the hollow (10) through the second seat (21) constituting a second support element for a third oblong element (3).

Preferably, the at least two arms (11, 12) are flat and the corresponding first seat (21) and second seat (22) of insertion of the arms have a long and narrow groove shape for insertion of a corresponding arm, the expression long and narrow referred to the groove meaning a groove shape in which a first side of the groove has dimension in length greater or much greater than the dimension in length of the second side of the groove, the width corresponding to the width of the flat shape of the arms.

In the preferred embodiment of the present invention, at least one of the at least two arms (11, 12) has a shape comprising a bending (33) and a counter-bending (34) defining portions of the first arm (11) including a first portion (16) and a second portion (17) reciprocally parallel and connected and spaced by a third portion (18) included between the bending (33) and the counter-bending (34), first portion (16) and a second portion (17) being engagement portions with internal walls of the internal hollow (10) of one of the oblong elements, such as for example the second oblong element (2).

Configurations can be provided in which at least two of the at least two arms (11, 12) have the shape comprising a bending (33) and a counter-bending (34) or also three arms or also four arms. For example, the third arm and the fourth arm can be connected with first arm
(1) and second arm in correspondence with the connection zone (37).

Preferably, but not necessarily, the fixing system further includes in correspondence at least with a second end (27) of the first oblong element (1) the described shape provided with hollow (10) and first seat (21) and second seat (22) of insertion for insertion of an additional joint element (7, 7', 7").

The fixing means (24) are preferably, but not necessarily, countersunk-head screws for insertion in flush condition with an external surface of the oblong elements (1, 2, 3, 4, 5, 6).

The oblong elements of the series of oblong elements (1, 2, 3, 4, 5, 6) are preferably internally hollow profiles for the whole length of the body (8). For example, the oblong elements of the series of oblong elements (1, 2, 3, 4, 5, 6) can be profiles having quadrangular or square shape in section, first seat (21) and second seat (22) of insertion being obtained on adjacent sides placed at 90 degrees of the quadrangular or square shape in section of the respective oblong element.

The fixing system comprises at least one cover (25) provided with keying means insertable in the hollow (10), the cover (25) being shaped for complete hiding of the joint element (7,7', 7") inserted in the hollow (10).

The present invention also relates to a structure (20) for pieces of furniture consisting of a series of oblong elements (1, 2, 3, 4, 5, 6) reciprocally coupled by means of a series of joint elements (7, 7', 7") in which the structure for pieces of furniture is made by means of a fixing system comprising at least one of said joint elements (7, 7', 7"), which constitutes a coupling interface between at least two of the oblong elements (1, 2, 3, 4, 5, 6) in such a way that the reciprocal coupling of the series of oblong elements (1, 2, 3, 4, 5, 6) by means of a series of joint elements (7, 7', 7") and fixing means (24) is suitable for the assembly of said structure (20), the joint element (7, 7', 7") comprising at least two arms (11, 12) of which a first arm (1) and a second arm (2) reciprocally connected in correspondence with a connection zone (37), in which first arm (1) and second arm (2) are reciprocally inclined according to a first angle (M), the oblong elements (1, 2, 3, 4, 5, 6) being provided with a body (8) having an elongated shape in which the fixing system of the structure is made as described.

The present invention also relates to a piece of furniture comprising a structure (20) for pieces of furniture consisting of a series of oblong elements (1, 2, 3, 4, 5, 6) reciprocally coupled by means of a series of joint elements (7, 7', 7") in which the structure for pieces of furniture is made by means of a fixing system comprising at least one of said joint elements (7, 7', 7"), which constitutes a coupling interface between at least two of the oblong elements (1, 2, 3, 4, 5, 6), in such a way that the reciprocal coupling of the series of oblong elements (1, 2, 3, 4, 5, 6) by means of a series of joint elements (7, 7', 7") and fixing means (24) is suitable for the assembly of said structure (20), the joint element (7, 7', 7") comprising at least two arms (11, 12) of which a first arm (1) and a second arm (2) reciprocally connected in correspondence with a connection zone (37), in which first arm (1) and second arm (2) are reciprocally inclined according to a first angle (M), the oblong elements (1, 2, 3, 4, 5, 6) being provided with a body (8) having an elongated shape in which the fixing system is made as described. For example the piece of furniture can be composed of the structure to which closing panels, wings, drawers, extractable baskets, accessories for pieces of furniture are then fixed according to typical configurations and methodologies known by the expert in the field.

The word piece of furniture is intended to include all kinds of furniture such as for example hangings, bases for kitchen furniture, wall-mounted units, but also parts of furniture such as for example wings.

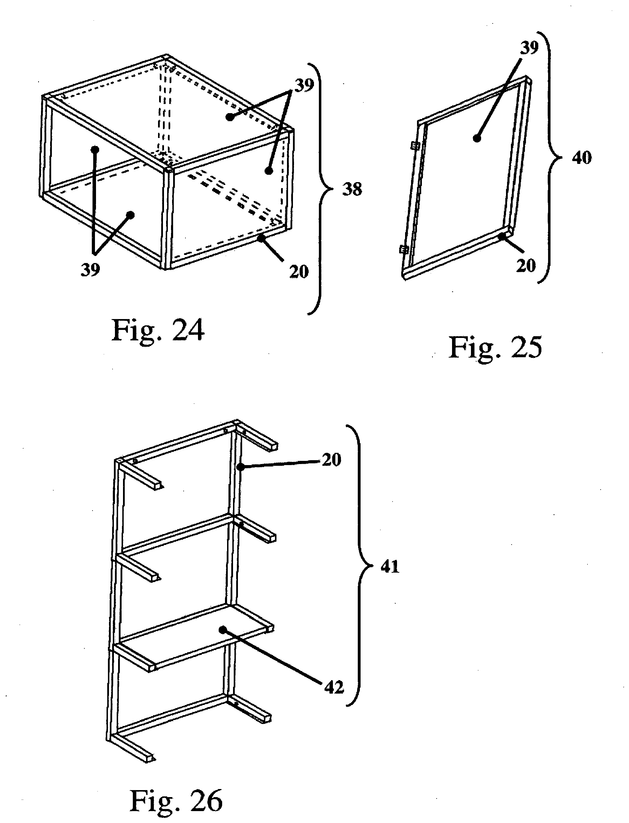

For example, the structure (20) can be used (Fig. 24) for the execution of a quadrangular piece of furniture (38) by means of the application of closing panels (39), such as for example a bottom panel, an upper panel and a lower panel, side panels.

For example, the structure (20) can be used (Fig. 25) for the execution of a quadrangular wing (40) by means of the application of a closing panel (39) of the quadrangular structure and by means of the application of hinges.

For example, the structure (20) can be used (Fig. 26) for the execution of a wall-mounted unit (41) by means of the application of shelves (42) on the structure.

The description of the present invention has been made with reference to the enclosed figures in one of its preferred embodiments, but it is evident that a lot of possible changes, modifications and variations will be immediately clear to those skilled in the art in the light of the previous description. Thus, it must be underlined that the invention is not limited to the previous description, but it includes all the changes, modifications and variations in accordance with the appended claims.

### NOMENCLATURE USED

With reference to the identification numbers in the enclosed figures, the following nomenclature has been used:
1. First oblong element
2. Second oblong element
3. Third oblong element
4. Fourth oblong element
5. Fifth oblong element
6. Sixth oblong element
7. Joint element
7'. First joint element
7". Second joint element
8. Body
9. First hole
10. Hollow
11. First arm
12. Second arm
13. Third arm
14. Auxiliary arm
15. Fixing system
16. First portion
17. Second portion
18. Third portion
19. Second hole
20. Structure
21. First seat
22. Second seat
23. Step
24. Screw
25. Cover
26. First end
27. Second end
28. Joint element insertion direction
29. Third oblong element insertion direction
30. Second oblong element insertion direction
31. First surface
32. Second surface
33. Bending
34. Counter-bending
35. First wall
36. Second wall
37. Connection zone
38. Piece of furniture
39. Panel
40. Wing
41. Wall-mounted unit
42. Shelf
M. First angle
N. Second angle

## Claims

1. Fixing system of a series of oblong elements (1, 2, 3, 4, 5, 6) for a structure (20) for pieces of furniture, the fixing system comprising at least one joint element (7, 7', 7") which constitutes a coupling interface between at least two of the oblong elements (1, 2, 3, 4, 5, 6) in such a way that the reciprocal coupling of the series of oblong elements (1, 2, 3, 4, 5, 6) by means of a series of joint elements (7, 7', 7") and fixing means (24) is suitable for the assembly of said structure (20), the joint element (7, 7', 7") comprising at least two arms (11, 12) a first arm (1) and a second arm (2) of which are reciprocally connected in correspondence with a connection zone (37), in which first arm (1) and second arm (2) are reciprocally inclined according to a first angle (M), the oblong elements (1, 2, 3, 4, 5, 6) being provided with a body (8) having an elongated shape wherein the fixing system includes:
- a hollow (10) obtained in the body (8) in correspondence at least with a first end (26) of a first oblong element (1) of the series of oblong elements (1, 2, 3, 4, 5, 6);
- a first seat (21) and a second seat (22) of insertion obtained in correspondence with the first end (26) of the first oblong element (1) in such a way that each one of first seat (21) and second seat (22) puts into communication the inside of the hollow (10) with the outside of the hollow (10);
first seat (21) and second seat (22) of insertion being placed reciprocally spaced along the perimeter of the hollow according to a reciprocal positioning corresponding to the inclination according to said first angle (M), in such a way that the joint element (7, 7', 7") is insertable within the hollow according to a configuration in which the connection zone (37) between the arms (1, 2) is housed inside the hollow (10), the first arm (11) protrudes externally with respect to the hollow (10) through the first seat (21) constituting a first support element for a second oblong element (2), the second arm (12) protrudes externally with respect to the hollow (10) through the second seat (21), constituting a second support element for a third oblong element (3), said at least two arms (11, 12) being flat and the corresponding first seat (21) and second seat (22) of insertion of the arms have a long and narrow groove shape for insertion of a corresponding arm, the expression long and narrow referred to the groove meaning a groove shape in which a first side of the groove has dimension in length greater than the dimension in length of the second side of the groove, the width corresponding to the width of the flat shape of the arms, wherein
at least one of the at least two arms (11, 12) has a shape comprising a bending (33) and a counter-bending (34) defining portions of the first arm (11) comprising a first portion (16) and a second portion (17) which are reciprocally parallel and connected and spaced by a third portion (18) included between the bending (33) and the counter-bending (34), first portion (16) and a second portion (17) constituting engagement portions with internal walls of the internal hollow (10) of one of said oblong elements.

2. Fixing system of a series of oblong elements (1, 2, 3, 4, 5, 6) for a structure (20) for pieces of furniture according to the previous claim, **characterized in that**
the first portion (16) of the first arm (11) is provided with a first external surface (31) and the second portion (17) of the first arm (11) is provided with a second external surface (32) which are reciprocally spaced by a distance corresponding to the distance between a couple of internal walls of the internal hollow (10) of the corresponding oblong element of which:
- a first wall (35) suitable for being in support condition against the first surface (31) of the first portion (16);
- a second wall (36) suitable for being in support condition against the second surface (32) of the second portion (17);
when the first arm (11) is in insertion condition inside the internal hollow (10) of the corresponding oblong element.

3. Fixing system of a series of oblong elements (1, 2, 3, 4, 5, 6) for a structure (20) for pieces of furniture according to any of the previous claims, **characterized in that** at least two of the at least two arms (11, 12) have said shape comprising a bending (33) and a counter-bending (34).

4. Fixing system of a series of oblong elements (1, 2, 3, 4, 5, 6) for a structure (20) for pieces of furniture according to any of the previous claims, **characterized in that** the first angle (M) is of 90 degrees.

5. Fixing system of a series of oblong elements (1, 2, 3, 4, 5, 6) for a structure (20) for pieces of furniture according to any of the previous claims 1 to 3, **characterized in that** the first angle (M) has a value selected between:
- first angle (M) having value greater than 90 degrees;
- first angle (M) having value lower than 90 degrees.

6. Fixing system of a series of oblong elements (1, 2, 3, 4, 5, 6) for a structure (20) for pieces of furniture according to any of the previous claims, **characterized in that** it includes a third arm (13) which is connected to first arm (1) and second arm (2) in correspondence with the connection zone (37), in which first arm (1) and third arm (13) are reciprocally inclined according to a second angle (N).

7. Fixing system of a series of oblong elements (1, 2, 3, 4, 5, 6) for a structure (20) for pieces of furniture according to the previous claim, **characterized in that**
the second angle (N) is of 90 degrees.

8. Fixing system of a series of oblong elements (1, 2, 3, 4, 5, 6) for a structure (20) for pieces of furniture according to claim 6, **characterized in that**
the second angle (N) has a value selected between:
- second angle (N) having value greater than 90 degrees;
- second angle (N) having value lower than 90 degrees.

9. Fixing system of a series of oblong elements (1, 2, 3, 4, 5, 6) for a structure (20) for pieces of furniture according to any of the previous claims 6 to 8 **characterized in that** it includes a fourth arm (14) which is connected to first arm (1), second arm and third arm (13) in correspondence with the connection zone (37).

10. Fixing system of a series of oblong elements (1, 2, 3, 4, 5, 6) for a structure (20) for pieces of furniture according to any of the previous claims, **characterized in that** the fixing system further includes at least in correspondence with a second end (27) of the first oblong element (1) said shape provided with said hollow (10) and said first seat (21) and second seat (22) of insertion for insertion of an additional joint element (7, 7', 7").

11. Fixing system of a series of oblong elements (1, 2, 3, 4, 5, 6) for a structure (20) for pieces of furniture according to any of the previous claims, **characterized in that** the fixing means (24) are countersunk-head screws for insertion in flush condition with an external surface of the oblong elements (1, 2, 3, 4, 5, 6).

12. Fixing system of a series of oblong elements (1, 2, 3, 4, 5, 6) for a structure (20) for pieces of furniture according to any of the previous claims **characterized in that** the oblong elements of the series of oblong elements (1, 2, 3, 4, 5, 6) are profiles which are internally hollow for the whole length of the body (8).

13. Fixing system of a series of oblong elements (1, 2, 3, 4, 5, 6) for a structure (20) for pieces of furniture according to any of the previous claims, **characterized in that** the oblong elements of the series of oblong elements (1, 2, 3, 4, 5, 6) are profiles which have a quadrangular or square shape in section, first seat (21) and second seat (22) of insertion being obtained on adjacent sides placed at 90 degrees of the quadrangular or square shape in section of the respective oblong element.

14. Fixing system of a series of oblong elements (1, 2, 3, 4, 5, 6) for a structure (20) for pieces of furniture according to any of the previous claims, **characterized in that** the joint element (7, 7', 7") is obtained from a flat small plate by means of shearing and bending.

15. Fixing system of a series of oblong elements (1, 2, 3, 4, 5, 6) for a structure (20) for pieces of furniture according to any of the previous claims, **characterized in that** it includes at least one cover (25) provided with keying means insertable in the hollow (10), the cover (25) being shaped for complete hiding of the joint element (7, 7', 7") inserted in the hollow (10).

16. Structure (20) for pieces of furniture consisting of a series of oblong elements (1, 2, 3, 4, 5, 6) reciprocally coupled by means of a series of joint elements (7, 7', 7"), in which the structure for pieces of furniture is made by means of a fixing system comprising at least one of said joint elements (7, 7', 7"), which constitutes a coupling interface between at least two of the oblong elements (1, 2, 3, 4, 5, 6), in such a way that the reciprocal coupling of the series of oblong elements (1, 2, 3, 4, 5, 6) by means of a series of joint elements (7, 7', 7") and fixing means (24) is suitable for the assembly of said structure (20), the joint element (7, 7', 7") comprising at least two arms (11, 12) a first arm (1) and a second arm (2) of which are reciprocally connected in correspondence with a connection zone (37), in which first arm (1) and second arm (2) are reciprocally inclined according to a first angle (M), the oblong elements (1, 2, 3, 4, 5, 6) being provided with a body (8) having an elongated shape **characterized in that** the fixing system is made according to any of the previous claims.

17. Piece of furniture comprising a structure (20) for pieces of furniture consisting of a series of oblong elements (1, 2, 3, 4, 5, 6) reciprocally coupled by means of a series of joint elements (7, 7', 7") in which the structure for pieces of furniture is made by means of a fixing system comprising at least one of said joint elements (7, 7', 7"), which constitutes a coupling interface between at least two of the oblong elements (1, 2, 3, 4, 5, 6) in such a way that the reciprocal coupling of the series of oblong elements (1, 2, 3, 4, 5, 6) by means of a series of joint elements (7, 7', 7") and fixing means (24) is suitable for the assembly of said structure (20), the joint element (7, 7', 7") comprising at least two arms (11, 12) a first arm (1) and a second arm (2) of which are reciprocally connected in correspondence with a connection zone (37), in which first arm (1) and second arm (2) are reciprocally inclined according to a first angle (M), the oblong elements (1, 2, 3, 4, 5, 6) being provided with a body (8) having an elongated shape, **characterized in that**
the fixing system is made according to any of the previous claims 1 to 15.

## Patentansprüche

1. Befestigungssystem einer Reihe von länglichen Elementen (1, 2, 3, 4, 5, 6) für eine Struktur (20) für Möbel, wobei das Befestigungssystem mindestens ein Verbindungselement (7, 7', 7") umfasst, das eine Kopplungsschnittstelle zwischen mindestens zwei der länglichen Elemente (1, 2, 3, 4, 5, 6) bildet, derart, dass die gegenseitige Kopplung der Reihe von länglichen Elementen (1, 2, 3, 4, 5, 6) mittels einer Reihe von Verbindungselementen (7, 7', 7") und Befestigungsmitteln (24) für die Montage der Struktur (20) geeignet ist, wobei das Verbindungselement (7, 7', 7") mindestens zwei Arme (11, 12) umfasst, von denen ein erster Arm (1) und ein zweiter Arm (2) in Übereinstimmung mit einer Verbindungszone (37) wechselseitig verbunden sind, wobei der erste Arm (1) und der zweite Arm (2) gemäß einem ersten Winkel (M) wechselseitig geneigt sind, wobei die länglichen Elemente (1,2, 3, 4, 5, 6) mit einem Körper (8) versehen sind, der eine längliche Form hat, wobei das Befestigungssystem Folgendes umfasst:
- einen Hohlraum (10), der in dem Körper (8) in Übereinstimmung mit mindestens einem ersten Ende (26) eines ersten länglichen Elements (1) der Reihe von länglichen Elementen (1, 2, 3, 4, 5, 6) erhalten wird;
- einen ersten Sitz (21) und einen zweiten Sitz (22) zum Einsetzen, die in Übereinstimmung mit dem ersten Ende (26) des ersten länglichen Elements (1) so erhalten werden, dass jeder der ersten Sitze (21) und der zweiten Sitze (22) das Innere des Hohlraums (10) mit dem Äußeren des Hohlraums (10) verbindet;
wobei der erste Sitz (21) und der zweite Sitz (22) zum Einsetzen entlang des Umfangs des Hohlraums in gegenseitigem Abstand gemäß einer gegenseitigen Positionierung angeordnet sind, die der Neigung gemäß dem ersten Winkel (M) entspricht, derart, dass das Verbindungselement (7, 7', 7") gemäß einer Konfiguration innerhalb des Hohlraums (10) einsteckbar ist, bei der die Verbindungszone (37) zwischen den Armen (1, 2) innerhalb des Hohlraums (10) untergebracht ist, wobei der erste Arm (11) in Bezug auf den Hohlraum (10) durch den ersten Sitz (21) nach außen vorsteht und ein erstes Stützelement für ein zweites längliches Element (2) bildet, der zweite Arm (12) in Bezug auf den Hohlraum (10) durch den zweiten Sitz (21) nach außen vorsteht und ein zweites Stützelement für ein drittes längliches Element (3) bildet, wobei die mindestens zwei Arme (11, 12) flach sind und der entsprechende erste Sitz (21) und zweite Sitz (22) zum Einsetzen der Arme eine lange und schmale Nutform zum Einsetzen eines entsprechenden Arms haben, der Ausdruck lang und schmal bezieht sich auf die Rille, was eine Rillenform bedeutet, bei der eine erste Seite der Rille eine Längenabmessung hat, die größer ist als die Längenabmessung der zweiten Seite der Rille, wobei die Breite der Breite der flachen Form der Arme entspricht, wobei mindestens einer der mindestens zwei Arme (11, 12) eine Form hat, die eine Biegung (33) und eine Gegenbiegung (34) umfasst, die Abschnitte des ersten Arms (11) definieren, die einen ersten Abschnitt (16) und einen zweiten Abschnitt (17) umfassen, die parallel zueinander sind und durch einen dritten Abschnitt (18) verbunden und beabstandet sind, der zwischen der Biegung (33) und der Gegenbiegung (34) enthalten ist, wobei ein erster Abschnitt (16) und ein zweiter Abschnitt (17), die Eingriffsabschnitte mit Innenwänden des inneren Hohlraums (10) eines der länglichen Elemente bilden.

2. Befestigungssystem einer Reihe von länglichen Elementen (1, 2, 3, 4, 5, 6) für eine Struktur (20) für Möbel nach dem vorhergehenden Anspruch, **dadurch gekennzeichnet, dass** der erste Abschnitt (16) des ersten Arms (11) mit einer ersten äußeren Oberfläche (31) versehen ist und der zweite Abschnitt (17) des ersten Arms (11) mit einer zweiten äußeren Oberfläche (32) versehen ist, die gegenseitig um einen Abstand beabstandet sind, der dem Abstand zwischen zwei Innenwänden des inneren Hohlraums (10) des entsprechenden länglichen Elements entspricht, von denen:
- eine erste Wand (35) geeignet ist, in einem Stützzustand gegen die erste Oberfläche (31) des ersten Abschnitts (16) zu sein;
- eine zweite Wand (36) geeignet ist, in einem Stützzustand gegen die zweite Oberfläche (32) des zweiten Abschnitts (17) zu sein;
wenn sich der erste Arm (11) im Einführzustand innerhalb des inneren Hohlraums (10) des entsprechenden länglichen Elements befindet.

3. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** mindestens zwei der mindestens zwei Arme (11, 12) die Form haben, die eine Biegung (33) und eine Gegenbiegung (34) umfasst.

4. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** der erste Winkel (M) 90 Grad beträgt.

5. Befestigungssystem einer Reihe von länglichen Elementen (1, 2, 3, 4, 5, 6) für eine Struktur (20) für Möbel nach einem der vorhergehenden Ansprüche 1 bis 3, **dadurch gekennzeichnet, dass**
der erste Winkel (M) einen Wert hat, der ausgewählt ist zwischen:
- einem ersten Winkel (M) mit einem Wert größer als 90 Grad;
- einem ersten Winkel (M) mit einem Wert kleiner als 90 Grad.

6. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** es einen dritten Arm (13) enthält, der mit dem ersten Arm (1) und dem zweiten Arm (2) entsprechend der Verbindungszone (37) verbunden ist, in der der erste Arm (1) und der dritte Arm (13) entsprechend gegeneinander geneigt zu einem zweiten Winkel (N) sind.

7. Befestigungssystem einer Reihe von länglichen Elementen (1, 2, 3, 4, 5, 6) für eine Struktur (20) für Möbel nach dem vorhergehenden Anspruch, **dadurch gekennzeichnet, dass** der zweite Winkel (N) 90 Grad beträgt.

8. Befestigungssystem einer Reihe von länglichen Elementen (1, 2, 3, 4, 5, 6) für eine Struktur (20) für Möbel nach Anspruch 6, **dadurch gekennzeichnet, dass**
der zweite Winkel (N) einen Wert hat, der ausgewählt ist zwischen:
- einem zweiten Winkel (N) mit einem Wert größer als 90 Grad;
- einem zweiten Winkel (N) mit einem Wert kleiner als 90 Grad.

9. Befestigungssystem einer Reihe von länglichen Elementen (1, 2, 3, 4, 5, 6) für eine Struktur (20) für Möbel nach einem der vorhergehenden Ansprüche 6 bis 8, **dadurch gekennzeichnet, dass**
es einen vierten Arm (14) enthält, der mit dem ersten Arm (1), dem zweiten Arm und dem dritten Arm (13) entsprechend der Verbindungszone (37) verbunden ist.

10. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** das Befestigungssystem ferner mindestens in Übereinstimmung mit einem zweiten Ende (27) des ersten länglichen Elements (1) die mit dem Hohlraum (10) und dem ersten Sitz (21) und dem zweiten Sitz (22) ausgestattete Form zum Einsetzen eines weiteren Verbindungselements (7, 7', 7") umfasst.

11. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** die Befestigungsmittel (24) Senkkopfschrauben zum bündigen Einsetzen in eine Außenfläche der länglichen Elemente (1, 2, 3, 4, 5, 6) sind.

12. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** die länglichen Elemente der Reihe von länglichen Elementen (1, 2, 3, 4, 5, 6) Profile sind, die über die gesamte Länge des Körpers (8) innen hohl sind.

13. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** die länglichen Elemente der Reihe von länglichen Elementen (1, 2, 3, 4, 5, 6) Profile sind, die im Querschnitt eine viereckige oder quadratische Form haben, wobei der erste Sitz (21) und der zweite Sitz (22) zum Einsetzen an benachbarten Seiten erhalten werden, die in einem Winkel von 90 Grad zur Formgebung im viereckigen oder quadratischen Querschnitt des jeweiligen länglichen Elements angeordnet sind.

14. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** das Verbindungselement (7, 7', 7") aus einer ebenen Platte durch Scheren und Biegen erhalten wird.

15. Befestigungssystem einer Reihe von länglichen Elementen (1, 2, 3, 4, 5, 6) für eine Struktur (20) für Möbel nach einem der vorhergehenden Ansprüche, **dadurch gekennzeichnet, dass** es mindestens eine Abdeckung (25) umfasst, die mit Schlüsselmittel versehen ist, die in den (10) Hohlraum einsetzbar ist, wobei die Abdeckung (25) so geformt ist, dass sie das in den Hohlraum (10) eingeführte Verbindungselement (7, 7', 7") vollständig verdeckt.

16. Struktur (20) für Möbel, bestehend aus einer Reihe von länglichen Elementen (1, 2, 3, 4, 5, 6), die mittels einer Reihe von Verbindungselementen (7, 7', 7") wechselseitig gekoppelt sind, wobei die Struktur für Möbel mittels eines Befestigungssystems hergestellt wird, das mindestens eines der Verbindungselemente (7, 7', 7") umfasst, das eine Kopplungsschnittstelle zwischen mindestens zwei der länglichen Elemente (1, 2, 3, 4, 5, 6) bildet, derart, dass die gegenseitige Kopplung der Reihe von länglichen Elementen (1, 2, 3, 4, 5, 6) mittels einer Reihe von Verbindungselementen (7, 7', 7") und Befestigungsmitteln (24) für die Montage der Struktur (20) geeignet ist, wobei das Verbindungselement (7, 7', 7") mindestens zwei Arme (11, 12) umfasst, von denen ein erster Arm (1) und ein zweiter Arm (2) entsprechend einer Verbindungszone (37) wechselseitig verbunden sind, bei dem der erste Arm (1) und der zweite Arm (2) gemäß einem ersten Winkel (M) gegeneinander geneigt sind, wobei die länglichen Elemente (1, 2, 3, 4, 5, 6) mit einem Körper (8) versehen sind, der eine längliche Form hat, **dadurch gekennzeichnet, dass**
das Befestigungssystem gemäß einem der vorhergehenden Ansprüche hergestellt ist.

17. Möbel mit einer Struktur (20) für Möbel, die aus einer Reihe von länglichen Elementen (1, 2, 3, 4, 5, 6) besteht, die mittels einer Reihe von Verbindungselementen (7, 7',7") wechselseitig gekoppelt sind, wobei die Struktur für Möbel mittels eines Befestigungssystems hergestellt ist, das mindestens eines der Verbindungselemente (7, 7', 7") umfasst, das eine Kopplungsschnittstelle zwischen mindestens zwei der länglichen Elemente (1, 2, 3, 4, 5, 6) bildet, derart dass die gegenseitige Kopplung der Reihe von länglichen Elementen (1, 2, 3, 4, 5, 6) mittels einer Reihe von Verbindungselementen (7, 7', 7") und Befestigungsmitteln (24) für die Montage der Struktur (20) geeignet ist, wobei das Verbindungselement (7, 7', 7") mindestens zwei Arme (11, 12) umfasst, von denen ein erster Arm (1) und ein zweiter Arm (2) entsprechend einer Verbindungszone (37) wechselseitig verbunden sind, bei dem der erste Arm (1) und der zweite Arm (2) gemäß einem ersten Winkel (M) gegeneinander geneigt sind, wobei die länglichen Elemente (1, 2, 3, 4, 5, 6) mit einem Körper (8) versehen sind, der eine längliche Form hat, **dadurch gekennzeichnet, dass**
das Befestigungssystem gemäß einem der vorhergehenden Ansprüche 1 bis 15 hergestellt ist.

## Revendications

1. Système de fixage d'une série d'éléments oblongs (1, 2, 3, 4, 5, 6) pour une structure (20) pour meubles, le système de fixage comprenant au moins un élément de jonction (7, 7', 7") qui constitue une interface de couplage entre au moins deux des éléments oblongs (1, 2, 3, 4, 5, 6) de sorte que le couplage réciproque de la série d'éléments oblongs (1, 2, 3, 4, 5, 6) au moyen d'une série d'éléments de jonction (7, 7', 7") et de moyens de fixage (24) est apte à l'assemblage de ladite structure (20), l'élément de jonction (7, 7', 7") comprenant au moins deux bras (11, 12) dont un premier bras (1) et un deuxième bras (2) sont réciproquement raccordés en correspondance avec une zone de raccordement (37), où premier bras (1) et deuxième bras (2) sont inclinés réciproquement selon un premier angle (M), les éléments oblongs (1, 2, 3, 4, 5, 6) étant pourvus d'un corps (8) ayant une forme oblongue où le système de fixage inclut :
- un évidement (10) obtenu dans le corps (8) en correspondance au moins avec une première extrémité (26) d'un premier élément oblong (1) de la série d'éléments oblongs (1, 2, 3, 4, 5, 6);
- un premier logement (21) et un deuxième logement (22) d'insertion obtenus en correspondance avec la première extrémité (26) du premier élément oblong (1) de sorte que chacun du premier logement (21) et deuxième logement (22) met en communication l'intérieur de l'évidement (10) avec l'extérieur de l'évidement (10) ;
le premier logement (21) et le deuxième logement (22) d'insertion étant placés réciproquement espacés le long du périmètre de l'évidement selon un positionnement réciproque correspondant à l'inclinaison selon ledit premier angle (M), de sorte que l'élément de jonction (7, 7', 7") est insérable à l'intérieur de l'évidement selon une configuration où la zone de raccordement (37) entre les bras (1, 2) est logée à l'intérieur de l'évidement (10), le premier bras (11) fait saillie extérieurement par rapport à l'évidement (10) à travers le premier logement (21) constituant un premier élément de support pour un deuxième élément oblong (2), le deuxième bras (12) fait saillie extérieurement par rapport à l'évidement (10) à travers le deuxième logement (21), constituant un deuxième élément de support pour un troisième élément oblong (3), lesdits au moins deux bras (11, 12) étant plats et les premier logement (21) et deuxième logement (22) d'insertion correspondants des bras ont une forme de rainure longue et étroite pour l'insertion d'un bras correspondant, l'expression longue et étroite qui fait référence à la rainure signifiant une forme de rainure où un premier côté de la rainure a une dimension en longueur supérieure à la dimension en longueur du deuxième côté de la rainure, la largeur correspondant à la largeur de la forme plate des bras, où
au moins l'un des au moins deux bras (11, 12) a une forme comprenant un pliage (33) et un contre-pliage (34) définissant des portions du premier bras (11) comprenant une première portion (16) et une deuxième portion (17) qui sont réciproquement parallèles et raccordées et espacées par une troisième portion (18) incluse entre le pliage (33) et le contre-pliage (34), une première portion (16) et une deuxième portion (17) constituant des portions d'engagement avec des parois internes de l'évidement interne (10) de l'un desdits éléments oblongs.

2. Système de fixage d'une série d'éléments oblongs (1, 2, 3, 4, 5, 6) pour une structure (20) pour meubles selon la revendication précédente, **caractérisé en ce que** la première portion (16) du premier bras (11) est pourvue d'une première surface externe (31) et la deuxième portion (17) du premier bras (11) est pourvue d'une deuxième surface externe (32) qui sont réciproquement espacées d'une distance correspondant à la distance entre un couple de parois internes de l'évidement interne (10) de l'élément oblong correspondant dont :
- une première paroi (35) apte à être dans une condition d'appui contre la première surface (31) de la première portion (16) ;
- une deuxième paroi (36) apte à être dans une condition d'appui contre la deuxième surface (32) de la deuxième portion (17) ;
lorsque le premier bras (11) est dans une condition d'insertion à l'intérieur de l'évidement interne (10) de l'élément oblong correspondant.

3. Système de fixage d'une série d'éléments oblongs (1, 2, 3, 4, 5, 6) pour une structure (20) pour meubles selon l'une quelconque des revendications précédentes, **caractérisé en ce que** au moins deux des au moins deux bras (11, 12) ont ladite forme comprenant un pliage (33) et un contre-pliage (34).

4. Système de fixage d'une série d'éléments oblongs (1, 2, 3, 4, 5, 6) pour une structure (20) pour meubles selon l'une quelconque des revendications précédentes, **caractérisé en ce que** le premier angle (M) est de 90 degrés.

5. Système de fixage d'une série d'éléments oblongs (1, 2, 3, 4, 5, 6) pour une structure (20) pour meubles selon l'une quelconque des revendications précédentes 1 à 3, **caractérisé en ce que**
le premier angle (M) a une valeur choisie entre :
- premier angle (M) ayant une valeur supérieure à 90 degrés ;
- premier angle (M) ayant une valeur inférieure à 90 degrés.

6. Système de fixage d'une série d'éléments oblongs (1, 2, 3, 4, 5, 6) pour une structure (20) pour meubles selon l'une quelconque des revendications précédentes, **caractérisé en ce que** il inclut un troisième bras (13) qui est raccordé au premier bras (1) et deuxième bras (2) en correspondance avec la zone de raccordement (37), où le premier bras (1) et troisième bras (13) sont inclinés réciproquement selon un deuxième angle (N).

7. Système de fixage d'une série d'éléments oblongs (1, 2, 3, 4, 5, 6) pour une structure (20) pour meubles selon la revendication précédente, **caractérisé en ce que** le deuxième angle (N) est de 90 degrés.

8. Système de fixage d'une série d'éléments oblongs (1, 2, 3, 4, 5, 6) pour une structure (20) pour meubles selon la revendication 6, **caractérisé en ce que**
le deuxième angle (N) a une valeur choisie entre :
- deuxième angle (N) ayant une valeur supérieure à 90 degrés ;
- deuxième angle (N) ayant une valeur inférieure à 90 degrés.

9. Système de fixage d'une série d'éléments oblongs (1, 2, 3, 4, 5, 6) pour une structure (20) pour meubles selon l'une quelconque des revendications précédentes 6 à 8 **caractérisé en ce que**
il inclut un quatrième bras (14) qui est raccordé au premier bras (1), deuxième bras et troisième bras (13) en correspondance avec la zone de raccordement (37).

10. Système de fixage d'une série d'éléments oblongs (1, 2, 3, 4, 5, 6) pour une structure (20) pour meubles selon l'une quelconque des revendications précédentes, **caractérisé en ce que** le système de fixage inclut en outre au moins en correspondance avec une deuxième extrémité (27) du premier élément oblong (1) ladite forme pourvue dudit évidement (10) et desdits premier logement (21) et deuxième logement (22) d'insertion pour l'insertion d'un élément de jonction supplémentaire (7, 7', 7").

11. Système de fixage d'une série d'éléments oblongs (1, 2, 3, 4, 5, 6) pour une structure (20) pour meubles selon l'une quelconque des revendications précédentes, **caractérisé en ce que** les moyens de fixage (24) sont des vis à tête fraisée pour l'insertion à fleur d'une surface externe des éléments oblongs (1, 2, 3, 4, 5, 6).

12. Système de fixage d'une série d'éléments oblongs (1, 2, 3, 4, 5, 6) pour une structure (20) pour meubles selon l'une quelconque des revendications précédentes **caractérisé en ce que** les éléments oblongs de la série d'éléments oblongs (1, 2, 3, 4, 5, 6) sont des profilés qui sont creux intérieurement pour toute la longueur du corps (8).

13. Système de fixage d'une série d'éléments oblongs (1, 2, 3, 4, 5, 6) pour une structure (20) pour meubles selon l'une quelconque des revendications précédentes, **caractérisé en ce que** les éléments oblongs de la série d'éléments oblongs (1, 2, 3, 4, 5, 6) sont des profilés qui ont une forme quadrangulaire ou carrée en section, le premier logement (21) et le deuxième logement (22) d'insertion étant obtenus sur côtés adjacents placés à 90 degrés de la forme quadrangulaire ou carrée en section de l'élément oblong respectif.

14. Système de fixage d'une série d'éléments oblongs (1, 2, 3, 4, 5, 6) pour une structure (20) pour meubles selon l'une quelconque des revendications précédentes, **caractérisé en ce que** l'élément de jonction (7, 7', 7") est obtenu à partir d'une plaquette plate par cisaillement et pliage.

15. Système de fixage d'une série d'éléments oblongs (1, 2, 3, 4, 5, 6) pour une structure (20) pour meubles selon l'une quelconque des revendications précédentes, **caractérisé en ce que** il inclut au moins un couvercle (25) pourvu de moyens de blocage insérables dans l'évidement (10), le couvercle (25) étant conformé pour cacher complètement l'élément de jonction (7, 7', 7") inséré dans l'évidement (10).

16. Structure (20) pour meubles constituée d'une série d'éléments oblongs (1, 2, 3, 4, 5, 6) couplés réciproquement au moyen d'une série d'éléments de jonction (7, 7', 7"), où la structure pour meubles est réalisée au moyen d'un système de fixage comprenant au moins l'un desdits éléments de jonction (7, 7', 7"), qui constitue une interface de couplage entre au moins deux des éléments oblongs ( 1, 2, 3, 4, 5, 6), de sorte que le couplage réciproque de la série d'éléments oblongs (1, 2, 3, 4, 5, 6) au moyen d'une série d'éléments de jonction (7, 7', 7") et moyens de fixage (24) est apte à l'assemblage de ladite structure (20), l'élément de jonction (7, 7', 7") comprenant au moins deux bras (11, 12) dont un premier bras (1) et un deuxième bras (2) sont réciproquement raccordés en correspondance avec une zone de raccordement (37), où premier bras (1) et deuxième bras (2) sont réciproquement inclinés selon un premier angle (M), les éléments oblongs (1, 2, 3, 4, 5, 6) étant pourvus d'un corps (8) ayant une forme oblongue **caractérisée en ce que**
le système de fixage est réalisé selon l'une quelconque des revendications précédentes.

17. Meuble comprenant une structure (20) pour meubles constituée d'une série d'éléments oblongs (1, 2, 3, 4, 5, 6) couplés réciproquement au moyen d'une série d'éléments de jonction (7, 7', 7") où la structure pour meubles est réalisée au moyen d'un système de fixage comprenant au moins l'un desdits éléments de jonction (7, 7', 7"), qui constitue une interface de couplage entre au moins deux des éléments oblongs (1, 2, 3, 4, 5, 6) de sorte que le couplage réciproque de la série d'éléments oblongs (1, 2, 3, 4, 5, 6) au moyen d'une série d'éléments de jonction (7, 7', 7") et moyens de fixage (24) est apte à l'assemblage de ladite structure (20), l'élément de jonction (7, 7', 7") comprenant au moins deux bras (11, 12) dont un premier bras (1) et un deuxième bras (2) sont réciproquement raccordés en correspondance avec une zone de raccordement (37), où premier bras (1) et deuxième bras (2) sont inclinés réciproquement selon un première angle (M), les éléments oblongs (1, 2, 3, 4, 5, 6) étant pourvus d'un corps (8) ayant une forme oblongue, **caractérisé en ce que**
le système de fixage est réalisé selon l'une quelconque des revendications précédentes 1 à 15.
